# EUROPÄISCHE PATENTSCHRIFT

(11) **EP 0 510 408 B1**
(45) Veröffentlichungstag und Bekanntmachung des Hinweises auf die Patenterteilung: **21.06.1995**
(21) Anmeldenummer: 92105763.4
(22) Anmeldetag: 03.04.1992
(51) Int. Cl.: G01J 1/46

(54) **Photodetektoranordnung**
Photodetector arrangement
Agencement de photodétecteur

(30) Priorität: 23.04.1991 DE 4113207
(43) Veröffentlichungstag der Anmeldung: 28.10.1992
(73) Patentinhaber: TEMIC TELEFUNKEN microelectronic GmbH, 74072 Heilbronn (DE)
(72) Erfinder: Hofmann, Karl, Dr., W-7900 Ulm (DE); Oelmaier, Reinhard, Dipl.-Ing., W-7958 Laupheim (DE)
(74) Vertreter: Maute, Hans-Jürgen, Dipl.-Ing.

(56) Entgegenhaltungen:
- DE-B- 1 167 556
- GB-A- 1 125 303

## Beschreibung

Die Erfindung betrifft eine Photodetektoranordnung mit einer Mehrzahl von Photodetektoren.

Derartige Photodetektoranordnungen sind allgemein auch als Photodetektorarrays bekannt und z.B. in IEEE Transactions on Electron Devices, Vol. ED-29 (1982) Jan, No. 1, p.3-13 beschrieben.

Aus der GB-A- 1 125 303 ist ein Radiometer mit einem einzelnen Detektorelement bekannt, bei welchem von einer Stromquelle ein einstellbarer Kompensationsstrom in einen Stromknoten entgegen dem Detektorstrom fließt. Der Stromknoten ist mit dem Eingang eines rückgekoppelten Verstärkers verbunden, in dessen Rückkopplungszweig für gleichförmige Detektorsignale ein Widerstandsnetzwerk und für pulsförmige Signale einer von mehreren Integrationskondensatoren liegt, so daß der Eingang auf konstantem Potential gehalten wird.

Lineare oder 2-dim. Photodetektorarrays werden ausgelesen, indem die Detektorelemente an elektronische Schaltungen angekoppelt werden, die dafür sorgen, daß die Detektorsignale im Zeitmultiplexverfahren ausgelesen werden. Ausleseschaltungen die dafür geeignet sind, sind Charge-Coupled-Devices (CCDs) oder FET-switch Multiplexer Arrays. In diesen Schaltungen wird im allgemeinen für jedes einzelne Detektorelement eine individuelle Kopplungsschaltung benötigt.

Um ein möglichst hohes Signal-Rauschverhältnis (S/N) zu erreichen, ist anzustreben, daß die Kopplungsschaltung so ausgelegt wird, daß der Detektorstrom während der Zeit aufintegriert werden kann, die benötigt wird, um die Signale von allen Elementen des Arrays einmal auszulesen. In diesem Fall entspricht die Integrationszeit der sogenannten Frame Time. Für die Integration des Detektorstroms muß in der Kopplungsstruktur eine Kapazität vorgesehen werden. Diese bestimmt die maximale Ladung, die in der Kopplungsstruktur aufintegriert werden kann.

Speziell für Detektoren, die in einem 2-dim. Array angeordnet sind, ist die Fläche, die für den Integrationskondensator in der Kopplungsschaltung zur Verfügung steht begrenzt. Die Integrationskapazität, die proportional zur Fläche des Kondensators ist, kann deshalb nicht beliebig erhöht werden.

Bei Photodetektorarrays, die durch einen hohen Dunkelstrom gekennzeichnet sind, z.B. PV-CMT Arrays für den Spektralbereich von 8-12 »m, oder die im Betrieb einen hohen Hintergrundphotostrom liefern, wird deshalb die maximal erreichbare Integrationszeit durch die verfügbare Kapazität begrenzt. Um trotzdem ein möglichst hohes S/N zu erreichen muß dann die Frame-Time der Integrationszeit angepaßt werden. Die effektive Integrationszeit kann dann durch Mittelung der digitalisierten Daten wieder erhöht werden. Für großformatige Arrays (z.B. Arrays mit 256x256 Detektorelementen) führt dies zu sehr hohen Datenraten, die entsprechend hohe Anforderungen an ein nachfolgendes Signalverarbeitungssystem stellen. Häufig ist daher die Integrationszeit erheblich kürzer als die Frame-Time und das S/N entsprechend ungünstig.

Die Aufgabe der vorliegenden Erfindung ist es daher, eine Photodetektoranordnung dieser Art mit verbessertem Signal/Rausch-Verhältnis anzugeben.

Die Erfindung ist im Patentanspruch 1 beschrieben. Die abhängigen Ansprüche enthalten vorteilhafte Ausgestaltungen und Weiterbildungen der Erfindung.

Durch die Verringerung des Ladestroms für den Integrationskondensator kann entsprechend die Integrationszeit verlängert und können Rauschanteile bereits vor dem Auslesen besser ausgemittelt werden. Je nach Anteil der einzelnen Detektorstrombeiträge Signalphotostrom, Hintergrundphotostrom und Dunkelstrom sind dabei die folgenden beiden bevorzugten Varianten einzeln oder gemeinsam eingesetzt von besonderem Vorteil:
1. Die Ankoppelstufe wird mit einer Kompensationsstromquelle versehen. Diese Stromquelle speist während der Integration permament einen konstanten Strom in den Integrationskondensator, dessen Polarität dem Detektorstrom entgegengesetzt ist;
2. Zwischen dem Detektorelement und dem Integrationskondensator wird ein Stromspiegel angebracht, der bewirkt, daß der Strom, der in dem Integrationskondensator aufintegriert wird betragsmäßig um einen festen Faktor kleiner ist als der Detektorstrom.

Die Erfindung ist nachfolgend anhand von bevorzugten Ausführungsbeispielen unter Bezugnahme auf die Abbildungen noch eingehend veranschaulicht. Dabei zeigt:
- FIG. 1: die Grundstruktur einer Kopplungsschaltung
- FIG. 2: eine erste Ausführung der Erfindung
- FIG. 3: eine zweite Ausführung der Erfindung.

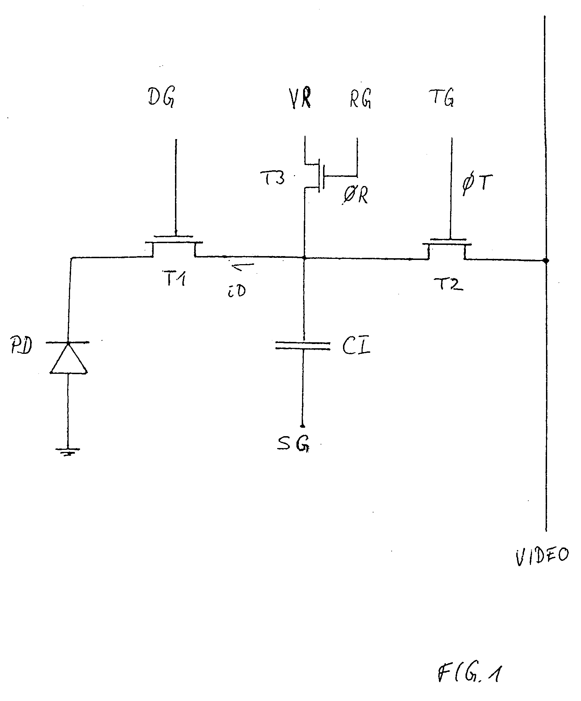

Die in FIG. 1 skizzierte Kopplungsschaltung in MOS-Technologie basiert auf dem Prinzip der direkten Injektion. Ein Photodetektorelement PD ist über einen Transistor T1 mit einem Integrationskondensator CI verbindbar. Mittels dieses Transistors kann der Arbeitspunkt des Detektors eingestellt werden. Während eines Integrationszyklus ist durch Anlegen eines entsprechenden Potentials an das Detektorgate DG des Transistors T1 das Detektorelement PD mit dem Kondensator CI verbunden und es fließt ein Detektorstrom, der den Integrationskondensator auflädt (oder entlädt). Die Transistoren T2 und T3 sind gesperrt. Nach Abschluß des Integrationszyklus enthält die Ladung bzw. Spannung auf dem Integrationskondensator das über den Integrationszyklus integrierte Detektorsignal. Zum Auslesen des Detektorsignals wird bei unverändert gesperrtem Transistor T3 ein Transferimpuls 0̸T auf das Transfergate TG des Transistors T2 gegeben und die im Integrationskondensator CI gespeicherte Ladung ganz oder teilweise auf die mehreren Elementen gemeinsame Videoausleseschaltung geleitet. Danach kann der nächste Integrationszyklus beginnen. Häufig wird in der Kopplungsstruktur ein weiterer Transistor T3 vorgesehen, über welchen zwischen dem Auslesen und dem nächsten Integrationszyklus während eines Rücksetz-Impulses 0̸R am Reset-Gate RG dieses Transistors T3 der Integrationskondensator CI auf ein definiertes Referenzpotential VR aufgeladen wird. Bei den nachfolgenden Erläuterungen von Ausführungsformen der Erfindung wird von der beschriebenen Kopplungsschaltung ausgegangen, ohne daß der Erfindungsgedanke darauf beschränkt sein soll. Andere bekannte Kopplungsschaltungen, beispielsweise nach dem Prinzip der Buffered Direct Injection, sind gleicherweise geeignet.

Die in FIG. 2 skizzierte Ausführungsform der Erfindung ist bezüglich der Zahl und Anordnung der elektrischen Komponenten identisch mit der bekannten Anordnung nach FIG. 1. Wesentlich ist jedoch, daß der Transistor T3 durch Anlegen eines Kompensationspotentials COMP an das Transistorgate während des Integrationszyklus einen Kompensationsstrom iC zum Integrationskondensator CI führt, der dem Detektorstrom iD durch den Transistor T1 und das Detektorelement PD entgegengerichtet ist. Der Beitrag des Kompensationsstroms ist je nach Anwendungsfall und Einsatzbedingungen verschieden zu wählen und kann über das Gatepotential COMP festgelegt werden.

Der Einsatz einer derartigen durch T3 gebildeten Kompensationsstromquelle ist vor allem dann günstig, wenn das Photodetektorarray unter Bedingungen betrieben wird, bei denen der Hintergrundphotostrom, der nicht zum Signal beiträgt, wesentlich höher ist als der Signalstrom. Die Kompensationsstromquelle kann dann so eingestellt werden, daß nur der Hintergrundphotostrom kompensiert wird; d.h. es geht keine Information verloren. Im Prinzip steht damit die gesamte Kapazität CI als Ladungsspeicher zur Integration des Signalphotostroms zur Verfügung. Bei vorgegebener maximaler Kapazität, d.h. Fläche, die für CI zur Verfügung steht kann deshalb die Integrationszeit und damit das S/N erhöht werden.

In einem weiteren Anwendungsfall, wenn der Dunkelstrom der Detektorelemente höher ist als der Signalstrom, führt die Methode der Stromkompensation in ähnlicher Weise zu einer Verbesserung des S/N.

Ein weiterer Vorteil der Ausführungsform von FIG. 2 ist, daß die Kompensationsstromquelle nur einen Transistor in der Kopplungsstruktur benötigt. Dies ist wichtig bei Kopplungsstufen für 2-dim. Arrays mit geringen Abständen zwischen den Detektorelementen, da dann für die Kopplungsschaltung nur wenig Platz verfügbar ist. Vorzugsweise ist das Gatepotential von T3 veränderbar, so daß der Transistor T3 auch in der zu FIG. 1 beschriebenen Weise zum Rücksetzen des Integrationskondensators benutzt werden kann. Zu FIG. 2 ist dies durch zwei Gate-Zuleitungen zum Transistor T3 für das Potential COMP einerseits und den Rücksetz-Impuls 0̸R andererseits veranschaulicht. Im Regelfall kann für beide Steuersignale COMP und 0̸R dieselbe Zuleitung dienen.
Werden in einem Array die Anschlüsse von T3 in allen Kopplungsstufen mit dem gleichen Potential COMP versorgt, so kann in allen Kopplungsstufen der gleiche Kompensationsstrom eingestellt werden.

Aus Gründen der Reduzierung des Eigenrauschens der Koppelschaltung ist es günstig, wenn das Potential COMP nicht in der Koppelschaltung, sondern vorzugsweise auf dem Chip der Ausleseschaltung erzeugt wird. Dazu kann eine entsprechende Schaltung auf den Chip integriert werden. Die Kompensationsstromquelle kann dann z.B. als ein Zweig eines Stromspiegels betrieben werden, dessen Steuerzweig in der Ausleseschaltung angeordnet ist und der die Kompensationsstromquelle zu einer Mehrzahl verschiedener Kopplungsschaltungen bzw. Detektorelemente umfaßt.

Wenn die Kompensationsstromguelle als Teil einer Stromspiegelschaltung ausgeführt wird, kann der Stromspiegel z.B. auch als kaskadierter Stromspiegel oder als Wilson Stromspiegel ausgelegt werden.

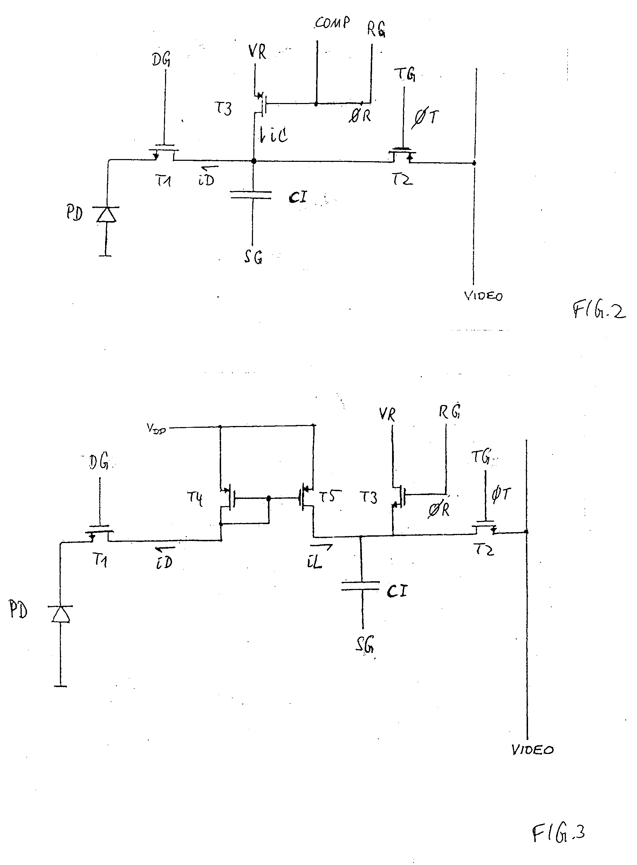

Die in FIG. 3 skizzierte Ausführungsform der Erfindung weist gegenüber der in FIG. 1 dargestellten bekannten Anordnung einen zwischen das Detektorelement PD und den Integrationskondensator CI eingefügten und vom Detektorstrom iD gesteuerten Stromspiegel mit an einem Versorgungspotential UDD liegenden Transistoren T4 und T5 auf. Der Stromspiegel wirkt als Stromteiler in der Weise, daß der durch T5 zum Integrationskondensator fließende Ladestrom iL betragsmäßig in einem festen Verhältnis steht zum Detektorstrom iD. Über das Verhältnis der geometrischen Abmessungen der beiden Transistoren kann das Stromteilerverhältnis iD/iL festgelegt werden. Vorzugsweise liegt dieses Verhältnis zwischen 2 und 30. Der Ladestrom des Integrationskondensators ist also um einen vorgegebenen Faktor gegenüber dem Detektorstrom reduziert. Bei gegebener Integrationskapazität kann daher die Integrationszeit verlängert und das S/N-Verhältnis des integrierten Detektorsignals verbessert werden.
Der Stromspiegel wirkt auf alle Komponenten des Detektorstroms (Signalphotostrom, Hintergrundphotostrom, Dunkelstrom) in gleicher Weise. Besonders vorteilhaft ist die Anwendung eines solchen Stromspiegels daher, wenn der Signalphotostrom größer oder vergleichbar ist mit dem Hintergrundphotostrom und/oder dem Dunkelstrom ist und die Frame Time (aus Gründen der Signalverarbeitung) nicht verkürzt werden kann. Die Vergrößerung der Integrationszeit durch den Stromspiegel erlaubt es, das S/N zu verbessern, selbst dann, wenn das Rauschen nicht durch den Hintergrundphotostrom sondern durch das Rauschen im Signalphotostrom bestimmt wird. Beispielsweise bedeutet dies für Infrarot-Detektorarrays, daß die Temperaturauflösung für Signale erhöht wird, die von "heißen" Wärmequellen erzeugt werden.

Das in FIG. 2 skizzierte Prinzip der Kompensationsstromquelle und das in FIG. 3 skizzierte Prinzip des Stromspiegels können auch in einer Anordnung vereinigt sein, wozu beispielsweise in FIG. 3 lediglich zusätzlich eine Ansteuerung des Transistors T3 durch ein Kompensationsstrom-Steuerpotential COMP wie in FIG. 2 vorzusehen ist. Die Kompensationsstromquelle kann auch zwischen Detektorelement und Stromspiegel vorgesehen sein. Vorzugsweise ist die Kompensationsstromquelle wahlweise aktiv oder inaktiv schaltbar.

Für Anwendungsfälle, in welchen sehr niedrige Detektorströme zu verarbeiten sind, z.B. astronomische Untersuchungen, und sich während seines Integrationszyklus im Integrationskondensator nur eine geringe Ladungsweise sammelt und damit nur geringe Spannungsänderungen zu detektieren sind, kann eine Abwandlung der in FIG. 3 skizzierten Anordnung mit einem Stromteilerfaktor kleiner 1, d.h. der Ladestrom iL ist größer als der Detektorstrom iD, vorgesehen sein. Dadurch können größere Spannungsänderungen im Integrationskondensator bewirkt werden, was sich vorteilhaft auf die weitere Signalverarbeitung in mit Eigenrauschen behafteten Auswerteschaltungen auswirkt. Außerdem kann auf die Verwendung von Minimalstrukturen für den Entwurf der Integrationskondensatoren verzichtet werden.

Die Abwandlung des Stromspiegels zu einer Stromverstärkung kann auch vorteilhaft verbunden werden mit dem Einsatz einer Kompensationsstromquelle, wenn einem hohen und annähernd konstanten, durch Dunkelstrom und Hintergrundstrom verursachten Gleichanteil in den Detektorströmen nur sehr kleine Signalphotoströme überlagert sind. In diesem Fall kann mittels der Kompensationsstromquelle der Gleichanteil weitgehend kompensiert und der Signalphotostromanteil verstärkt werden. Der Kompensationsstrom kann dabei auch einem langsam veränderlichen Gleichanteil der Detektorströme nachgeführt werden.

Die schaltungstechnischen Details, wie z.B. die geeignete Dimensionierung der im einzelnen auftretenden Potentiale oder die teilweise erforderliche komplementäre Ausführung von Transistoren (CMOS), sind dem Fachmann vertraut und daher nicht weiter ausgeführt.

Die Wirkung der beschriebenen Anordnungen ist teilweise vergleichbar mit dem bekannten Verfahren des "Skimming" und des "Partitioning", die aber als zeitdiskrete Maßnahmen am Ende eines Integrationszyklus eingesetzt werden und daher das Problem der zu kurzen Integrationszeit nicht lösen können. Skimming und Partitioning können ggf. auch bei den erfindungsgemäßen Anordnungen zusätzlich eingesetzt werden.

## Patentansprüche

1. Photodetektoranordnung mit einem Detektorelement (PD), einem dem Detektorelement (PD) zugeordneten Integrationskondensator (CI) und einer dem Detektorelement (PD) zugeordneten Kompensationsanordnung, die während eines Integrationszyklus einen Kompensationsstrom (iC) liefert, der bewirkt, daß ein den Integrationskondensator (CI) aufladender oder entladender Ladestrom um ein vorgegebenes Maß geringer ist als ein durch das Detektorelement (PD) fließender Detektorstrom (iD), dadurch gekennzeichnet, daß
- die Photodetektoranordnung eine Mehrzahl weiterer als lineares oder zweidimensionales Photodetektor-Array ausgebildete Detektorelemente (PD) aufweist,
- jedem Detektorelement (PD) ein Integrationskondensator (CI) und eine Kompensationsanordnung zugeordnet ist,
- die während eines Integrationszyklus auf den Integrationskondensatoren (CI) integrierten Ladungen als Detektorsignale im Zeitmultiplex auslesbar sind,
- jede Kompensationsanordnung eine als Feldeffekttransistor (T3) ausgebildete Kompensationsstromquelle aufweist, die den Kompensationsstrom (iC) der jeweiligen Kompensationsanordnung bereitstellt,
- die Integrationskondensatoren (CI) jeweils vor Beginn eines Integrationszyklus über den Feldeffekttransistor (T3) der jeweiligen Kompensationsanordnung auf einen vorgebbaren Spannungswert aufladbar sind.

2. Anordnung nach Anspruch 1, dadurch gekennzeichnet, daß der Betrag des Kompensationsstromes (iC) einer Kompensationsanordnung veränderlich einstellbar ist.

3. Anordnung nach Anspruch 1, dadurch gekennzeichnet, daß mindestens eine Kompensationsanordnung einen vom jeweiligen Detektorstrom (iD) gesteuerten Stromspiegel (T4, T5) aufweist, der einen im vorgegebenen Verhältnis zu dem jeweiligen Detektorstrom (iD) stehenden Ladestrom (iL) erzeugt.

4. Anordnung nach Anspruch 3 und einem der Ansprüche 1 oder 2, dadurch gekennzeichnet, daß der Kompensationsstrom (iC) einer Kompensationsanordnung dem jeweiligen Detektorstrom (iD) oder vorzugsweise dem jeweiligen Ladestrom (iL) entgegengesetzt gepolt ist.

5. Anordnung nach Anspruch 4, dadurch gekennzeichnet, daß die Kompensationsstromquelle einer jeweiligen Kompensationsanordnung abschaltbar ist.

6. Anordnung nach einem der Ansprüche 3 bis 5, dadurch gekennzeichnet, daß das Teilungsverhältnis zwischen Ladestrom und jeweiligem Detektorstrom zwischen 2 und 30 liegt.

## Claims

1. Photodetector arrangement including a detector element (PD), an integrating capacitor (CI) which is associated with the detector element (PD) and a compensating arrangement which is associated with the detector element (PD) and which, during an integration cycle, delivers a compensating current (iC) which causes a charging current, that is charging or discharging the integrating capacitor (CI), to be smaller by a predetermined amount than a detector current (iD) which is flowing through the detector element (PD), characterised in that,
- the photodetector arrangement comprises a plurality of further detector elements (PD) which are formed as a linear or two dimensional photodetector array,
- an integrating capacitor (CI) and a compensating arrangement are associated with each detector element (PD)
- the charges which are integrated on the integrating capacitors (CI) during an integration cycle can be read-out as detector signals in time division multiplex,
- each compensating arrangement comprises a compensating current source formed as a field effect transistor (T3) which provides the compensating current (iC) for the respective compensating arrangement,
- the integrating capacitors (CI) can be charged up to a predetermined voltage value before the start of each integrating cycle via the field effect transistor (T3) of the respective compensating arrangement.

2. Arrangement in accordance with Claim 1, characterised in that, the value of the compensating current (iC) for a compensating arrangement can be variably adjusted.

3. Arrangement in accordance with Claim 1, characterised in that, at least one compensating arrangement comprises a current mirror (T4, T5) which is controlled by the respective detector current (iD) and which produces a charging current (iL) that has a predetermined relationship with the respective detector current (iD).

4. Arrangement in accordance with Claim 3 and either one of Claims 1 or 2, characterised in that, the compensating current (iC) of a compensating arrangement is oppositely poled to the respective detector current (iD) or, preferably, to the respective charging current (iL).

5. Arrangement in accordance with Claim 4, characterised in that, the compensating current source of a respective compensating arrangement can be switched off.

6. Arrangement in accordance with any of the Claims 3 to 5, characterised in that, the division ratio between the charging current and the respective detector current lies between 2 and 30.

## Revendications

1. Agencement de photodétecteur équipé d'un élément détecteur (PD), d'un condensateur d'intégration (CI) associé à l'élément détecteur (PD) et d'un dispositif de compensation associé à l'élément détecteur (PD), qui délivre durant un cycle d'intégration un courant de compensation (iC), qui provoque qu'un courant de charge chargeant ou déchargeant le condensateur d'intégration (CI) est plus faible d'une grandeur prescrite qu'un courant de détecteur (iD) circulant à travers l'élément détecteur (PD), caractérisé en ce que,
- le dispositif de photodétecteur comporte une pluralité d'autres éléments détecteurs PD réalisés sous la forme d'un réseau linéaire ou bidimensionnel de photodétecteurs,
- à chaque élément détecteur (PD) est associé un condensateur d'intégration (CI) et un dispositif de compensation,
- les charges intégrées durant un cycle d'intégration sur les condensateurs d'intégration (CI) sont lisibles par multiplexage temporel en tant que signaux de détecteur,
- chaque dispositif de compensation comporte une source de courant de compensation réalisée sous la forme d'un transistor à effet de champ (T3), qui délivre le courant de compensation (iC) du dispositif de compensation respectif,
- les condensateurs d'intégration (CI) peuvent être chargés respectivement avant le début d'un cycle d'intégration par l'intermédiaire du transistor à effet de champ (T3) du dispositif de compensation respectif à une valeur de tension pouvant être préalablement prescrite.

2. Dispositif selon la revendication 1, caractérisé en ce que l'intensité du courant de compensation (iC) d'un dispositif de compensation est réglable de façon variable.

3. Dispositif selon la revendication 1, caractérisé en ce qu'au moins un dispositif de compensation présente un miroir de courant (T4, T5) commandé par le courant de détecteur respectif (iD), qui génère un courant de charge (iL) présentant un rapport prescrit vis-à-vis du courant de détecteur respectif (iD).

4. Dispositif selon la revendication 3 et l'une des revendications 1 ou 2, caractérisé en ce que le courant de compensation (iC) d'un dispositif de compensation est de polarité opposée au courant de détecteur respectif (iD) ou de préférence au courant de charge respectif (iL).

5. Dispositif selon la revendication 4, caractérisé en ce que la source de courant de compensation d'un dispositif de compensation respectif peut être supprimée.

6. Dispositif selon l'une des revendications 3 à 5, caractérisé en ce que le rapport de division entre le courant de charge et le courant de détecteur respectif est compris entre 2 et 30.
